(19) Europäisches Patentamt
European Patent Office
Office européen des brevets

(11) Veröffentlichungsnummer: **0 022 250**
**B1**

(12) **EUROPÄISCHE PATENTSCHRIFT**

(45) Veröffentlichungstag der Patentschrift: **09.02.83**

(51) Int. Cl.³: **C 08 F 10/00**, C 08 F 4/64, C 08 F 4/62, C 08 F 4/68

(21) Anmeldenummer: **80103786.2**

(22) Anmeldetag: **03.07.80**

(54) **Verfahren zur Polymerisation von alpha-Olefinen.**

(30) Priorität: **05.07.79 DE 2927221**
**31.07.79 DE 2931045**
**22.04.80 DE 3015376**

(43) Veröffentlichungstag der Anmeldung:
**14.01.81 Patentblatt 81/2**

(45) Bekanntmachung des Hinweises auf die Patenterteilung:
**09.02.83 Patentblatt 83/6**

(84) Benannte Vertragsstaaten:
**BE DE FR IT**

(56) Entgegenhaltungen:
**DE-A-2 708 588**
**FR-A-2 324 652**
**US-A-4 120 820**

(73) Patentinhaber: **WACKER-CHEMIE GMBH,**
**Prinzregentenstrasse 22, D-8000 München 22 (DE)**

(72) Erfinder: **Kurz, Dieter, Dr. Dipl.-Chem.,**
**Langdörfferstrasse 12a, D-8263 Burghausen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 022 250 B1

BUNDESDRUCKEREI BERLIN

# Verfahren zur Polymerisation von alpha-Olefinen

Die Polymerisation von α-Olefinen, insbesondere Äthylen, mit Hilfe von Katalysatorfeststoffen, die Elemente der IV. und/oder V. Nebengruppe des Periodensystems, Magnesium, Halogen, Sauerstoff und gegebenenfalls Bor oder Aluminium enthalten und mit Aluminiumalkylen aktiviert werden, in der Gasphase oder in Kohlenwasserstoffen als Verdünnungs- und Dispergiermittel ist bekannt.

Da die Eigenschaften der so hergestellten Polyolefine sehr stark vom eingesetzten Katalysator abhängen, wurden bereits verschiedenartige Katalysatorsysteme zur Polymerisation von α-Olefinen vorgeschlagen.

Die meisten bisher bekannten, mit Aluminiumalkylen aktivierten Katalysatorfeststoffe liefern bei der Polymerisation von α-Olefinen Produkte mit enger Molekulargewichtsverteilung, d. h., der mittlere Polymerisationsgrad eines bei einem Polymerisationsansatz hergestellten Polyolefingemisches liegt in einem engen Bereich. Diese enge Molekulargewichtsverteilung des Polymerisats bewirkt, daß daraus hergestellte Extrudate infolge »Schmelzbruches« rauhe Oberflächen aufweisen, so daß diese Polymerisate für viele Verwendungen, z. B. zur Herstellung von Hohlkörpern und Folien, ungeeignet sind.

Es stellte sich daher die Aufgabe, Polyolefine mit breiter Molekulargewichtsverteilung herzustellen.

Von den wenigen bekannten Katalysatorsystemen, die Produkte mit breiter Molekulargewichtsverteilung liefern, ist ein Großteil technisch nicht brauchbar, weil das Polymerisationsprodukt in seinen Korneigenschaften nicht den bei der Polymerisation, Aufarbeitung und Weiterverarbeitung zu stellenden Anforderungen genügt oder weil die Molekulargewichtsverteilung für viele Anwendungsgebiete noch nicht breit genug ist.

Ein anderer Teil dieser Katalysatorsysteme besitzt keine genügend hohe Katalysator-Aktivität, so daß größere Mengen eingesetzt werden müssen, die ins Polymerisat gelangen, dessen Eigenschaften, insbesondere Stabilität, beeinträchtigen und daher durch aufwendige Folgeprozesse unschädlich gemacht oder entfernt werden müssen.

Ein weiterer Teil dieser bekannten Systeme liefert nur dann Produkte mit breitverteilten Molekulargewichten, wenn die Polymerisation in Gegenwart spezieller, genau einzuhaltender Aktivatormischungen, ein anderer, wenn die Polymerisation in Gegenwart zusätzlicher Hilfsstoffe, welche anschließend wieder aus dem Polymerisationsmedium entfernt werden müssen, durchgeführt wird.

Ein weiterer Teil solcher bekannter Systeme scheidet für den großtechnischen Einsatz aus, weil die physikalischen Eigenschaften, wie Steifigkeit, Schlagzähigkeit und Spannungsrißbeständigkeit der aus dem Polymerisationsprodukt hergestellten Formkörper für viele Anwendungszwecke nicht ausreichend sind.

Manche Katalysatoren verfärben auch das Produkt. Diese unerwünschten Verfärbungen werden hauptsächlich durch Katalysatorreste hervorgerufen, die darüber hinaus vielfach die Lichtstabilität des Produktes beeinträchtigen.

Als Beispiel für einen bisher bekannten Katalysator wird auf die DE-OS 2 635 298 verwiesen. Dieser Katalysator wird durch Mahlen eines Gemisches aus Magnesiumhalogenid, Alkoxyaluminiumhalogenid, einer vierwertigen und einer dreiwertigen Titanverbindung hergestellt. Bei der Polymerisation tritt jedoch Wandanlage auf, die Polymerisate selbst besitzen schlechte Pulverrheologie, niedrige Schüttdichte und hohen Feinanteil.

Aufgabe der Erfindung war es daher, ein Polymerisationsverfahren für alpha-Olefine zur Verfügung zu stellen, das Produkte breiter Molekulargewichtsverteilung, guter physikalischer Eigenschaften, guter Verarbeitbarkeit und guter Reinheit liefert.

Diese Aufgabe wird durch die vorliegende Erfindung gelöst.

Gegenstand der Erfindung ist ein Verfahren zur diskontinuierlichen oder kontinuierlichen Polymerisation von α-Olefinen in der Gasphase oder in Kohlenwasserstoffen als Dispergiermittel bei Drücken von 2 bis 40 bar und Temperaturen von 60 bis 100°C, gegebenenfalls unter Verwendung von Wasserstoff als Molekulargewichtsregler in Gegenwart eines Feststoffes als Katalysator, der als Komponente I ein Produkt enthält, das sich von Verbindungen von Elementen der IV. und/oder V. Nebengruppe(n) des Periodensystems der Elemente, des Magnesiums, eines Halogens, einem Alkohol und gegebenenfalls einem Element der II. und/oder III. Hauptgruppe(n) des Periodensystems ableitet und als Komponente II Metallorganylverbindung(en) der II. und/oder III. Hauptgruppe(n) des Periodensystems enthält, dadurch gekennzeichnet, daß Komponente I durch Umsetzung eines Primärfeststoffes, der Magnesium und Halogen enthält, in zwei aufeinanderfolgenden Reaktionsstufen A und B, deren Reihenfolge beliebig ist, hergestellt wird, wobei der (Primär)-Feststoff in Reaktionsstufe A mit sekundären oder tertiären Alkoholen bzw. deren Gemischen und Halogen enthaltender(n) Metallverbindung(en) von Elementen der IV. und/oder V. Nebengruppe(n) des Periodensystems behandelt wird und in Reaktionsstufe B mit Halogen enthaltender(n) Metallverbindung(en) von Elementen der IV. und/oder V. Nebengruppe(n) und mindestens einer Metallorganylverbindung der II. und/oder III. Hauptgruppe(n) des Periodensystems umgesetzt wird, woran sich gegebenenfalls eine Nachbehandlung des so erhaltenen Feststoffes anschließt, bei der der

suspendierte Feststoff gealtert und/oder mit Metallorganylverbindung(en) der II. und/oder III. Hauptgruppe(n) des Periodensystems umgesetzt wird.

Unter »einer ein Element enthaltenden« Verbindung wird hier verstanden, daß das besagte Element in der besagten Verbindung chemisch gebunden ist, unter Periodensystem das nach Mendeleev (vgl. Handbook of Chemistry and Physics, 55. Auflage, Umschlaginnenseite).

Als alpha-Olefine, die nach dem erfindungsgemäßen Verfahren polymerisiert werden können, können alle alpha-Olefine eingesetzt werden, die bereits bisher bei Drücken von etwa 2—40 bar in Gegenwart von Feststoffkatalysatoren des sogenannten »Ziegler-Types« polymerisiert werden konnten. Bevorzugt wird Äthylen, das gegebenenfalls im Gemisch mit bis zu 10 Mol-% an $\alpha$-Olefinen mit 3—6 Kohlenstoffatomen eingesetzt und copolymerisiert werden kann.

Zur Herstellung des in dem erfindungsgemäßen Verfahren verwendeten Katalysators geht man von einem Primärfeststoff aus, der Magnesium und Halogen enthält.

Dieser Primärfeststoff kann vorzugsweise hergestellt werden, indem in Kohlenwasserstoffen lösliche Magnesiumverbindung(en) mit Chlorkohlenwasserstoff- und/oder Chlorkohlenstoffverbindung(en) jeweils mit 1—6 Kohlenstoffatomen umgesetzt wird (werden), von denen wenigstens eines mindestens zwei Chloratome direkt gebunden trägt.

In Kohlenwasserstoffen lösliche geeignete Magnesiumverbindungen werden einzeln oder als Gemisch eingesetzt, insbesondere magnesiumorganische Verbindungen der allgemeinen Formeln $R^1MgR^2$ und/oder $R^1MgOR^2$, in denen $R^1$ und $R^2$ gleiche oder verschiedene geradkettige oder verzweigte Alkyl- oder Arylreste mit 2 bis 20 C-Atomen bedeuten.

Besonders bevorzugt werden $R^1MgR^2$-Verbindungen, wie z. B. n-Butyläthylmagnesium, Di-n-butylmagnesium, n-Butyl-isobutylmagnesium, n-Butyl-sec-butylmagnesium, Di-n-hexylmagnesium, Di-n-pentylmagnesium, Di-n-octylmagnesium, Diphenylmagnesium oder Gemische dieser Verbindungen.

Diese magnesiumorganischen Verbindungen werden besonders vorzugsweise mit gesättigten Chlorkohlenwasserstoff- und/oder Chlorkohlenstoffverbindungen umgesetzt, wie Tetrachlorkohlenstoff, 1,1,1-Trichloräthan, 1,1,2-Trichloräthan, 1,1,2,2- und 1,1,1,2-Tetrachloräthan, Pentachloräthan, Hexachloräthan oder Gemischen dieser Verbindungen. Besonders bevorzugt wird jedoch Chloroform eingesetzt.

Die Magnesiumverbindung(en) und die organische Chlorverbindung, z. B. besonders vorzugsweise Chloroform, werden vorzugsweise in Mengen von 0,5 bis 10, besonders vorzugsweise 1 bis 4 Mol Chlorverbindung je Mol Magnesiumverbindung, vorzugsweise bei Temperaturen von $-10°C$ bis $+150°C$, insbesondere 20 bis 80°C, unter Rühren umgesetzt.

Hierbei ist die Reaktionszeit und der Verdünnungsgrad der Reaktanten weitgehend unkritisch. Die Reaktion kann binnen weniger Minuten oder einiger Stunden durchgeführt werden, z. B. in 30 bis 120 Minuten. Der Verdünnungsgrad kann in weiten Grenzen variiert werden, z. B. kann die organische Chlorverbindung, wie das besonders bevorzugte Chloroform, in reiner Form oder in Kohlenwasserstoffen gelöst, verwendet werden. Die magnesiumorganische Verbindung muß vor Einsetzen der Reaktion allerdings homogen in Kohlenwasserstoffen gelöst sein.

Die Reaktion kann in der Weise durchgeführt werden, daß die organische Chlorverbindung zur gelösten Magnesiumverbindung unter Rühren zudosiert wird oder daß beide Reaktanten gleichzeitig in das Reaktionsgefäß unter Rühren eindosiert werden. Bevorzugt werden jedoch die organischen Chlorverbindungen der vorstehend definierten Art, besonders vorzugsweise Chloroform, in reiner Form oder homogen in Kohlenwasserstoff gelöst vorgelegt und die Kohlenwasserstofflösung der magnesiumorganischen Verbindung(en) unter Rühren zudosiert, da auf diese Weise ein für das erfindungsgemäße Verfahren besonders gut geeigneter Katalysatorfeststoff hergestellt werden kann.

Der auf die geschilderte Weise hergestellte, Chlor und Magnesium enthaltende Primärfeststoff kann direkt weiterverwandt oder aber vorzugsweise vor der weiteren Behandlung mehrmals mit Kohlenwasserstoffen gewaschen werden.

Der Primärfeststoff wird dann mit Kohlenwasserstoff(en) versetzt, so daß eine rührfähige Suspension entsteht. Die Konzentration ist nicht entscheidend, jedoch sollte sie wegen der besseren Handhabung und der besseren weiteren Umsetzung in der nun folgenden ersten Reaktionsstufe möglichst konzentriert sein.

Die Reihenfolge der beiden aufeinanderfolgenden Reaktionsstufen A und B ist nicht entscheidend für den Erfolg des erfindungsgemäßen Polymerisationsverfahrens. So kann der in der vorstehend beschriebenen Weise hergestellte Primärfeststoff zunächst der Reaktionsstufe A unterworfen werden und nach Beendigung dieser Umsetzung entweder direkt oder nach einem zwischengeschalteten Reinigungsschritt in der Reaktionsstufe B weiter umgesetzt werden. Bevorzugt wird jedoch die umgekehrte Reihenfolge der Reaktionsstufen, vorzugsweise unter Zwischenschaltung eines Reinigungsschrittes, also die Reaktionsstufe B vor Reaktionsstufe A durchgeführt.

Der Primärfeststoff (oder in der bevorzugten Ausführungsform der Herstellung des Katalysators der in der Reaktionsstufe B modifizierte Feststoff) wird in der Reaktionsstufe A mit sekundärem(n) und/oder tertiärem(n) Alkohol(en), vorzugsweise der allgemeinen Formeln $R^3R^4R^5COH$ bzw. $R^3R^4HCOH$ und mit Halogen enthaltender(n) Metallverbindung(en) eines oder mehrerer Elemente(s) der IV. und/oder V. Nebengruppe(n) des Periodensystems umgesetzt.

Hierbei ist es möglich, erst die genannte(n) Metallverbindung(en) und dann den (die) Alkohol(e) zu

dem (Primär)-Feststoff zu dosieren oder beide Komponenten gleichzeitig zum magnesiumhaltigen Feststoff zu dosieren, jedoch wird vorzugsweise zunächst die Suspension des (Primär)-Feststoffes mit dem (den) Alkohol(en) behandelt und anschließend die Metallverbindung(en) zugesetzt. Selbstverständlich kann auch die Suspension des Feststoffes zu den genannten Reaktanten zudosiert werden, hierbei sollte aber vorzugsweise der eine Reaktant nicht mit dem anderen Reaktanten zusammenkommen, bevor er mit dem (Primär)-Feststoff zusammengegeben worden ist.

Die Umsetzung der Alkohole mit der Feststoffsuspension erfolgt vorzugsweise bei −20 bis 150° C, besonders vorzugsweise bei 0 bis 100° C, insbesondere bei 20 bis 60° C, die der Metallverbindung(en) mit der Feststoffsuspension vorzugsweise bei −20 bis 150° C, besonders vorzugsweise bei 0 bis 150° C, insbesondere bei 50 bis 100° C.

Soweit die Halogen enthaltenden Metallverbindungen der IV. und/oder V. Nebengruppe(n) des Periodensystems flüssig sind, können sie als solche eingesetzt werden, vorzugsweise und wenn sie nicht flüssig sind, werden sie jedoch vorzugsweise möglichst konzentriert gelöst in Kohlenwasserstoffen eingesetzt.

Die Reaktionszeiten dieser Reaktionsstufe A sind nicht kritisch, sie können von wenigen Minuten (z. B. 15 Minuten) bis zu mehreren Stunden (z. B. 2 Stunden) betragen.

Der sekundäre und/oder tertiäre Alkohol wird vorzugsweise in einer Menge von 0,01 bis 1, insbesondere 0,1 bis 0,5 mol je Mol (Grammatom) an im Feststoff enthaltenem Magnesium und die Metallverbindung wird vorzugsweise in Mengen von 1 bis 50, insbesondere 5 bis 15 mol je Mol an sekundärem und/oder tertiärem Alkohol eingesetzt. Es kann selbstverständlich von diesen Bereichen abgewichen werden, jedoch wird die Aktivität des Katalysators insbesondere von der Menge des Alkohols beeinflußt, so daß es nicht bevorzugt ist, insbesondere bei der Menge des Alkohols vom genannten bevorzugten Bereich abzuweichen.

Von den bevorzugten Alkoholen der allgemeinen Formeln $R^3R^4HCOH$ bzw. $R^3R^4R^5COH$, wobei $R^3$, $R^4$ und $R^5$ gleiche oder verschiedene, geradkettige gesättigte Alkylgruppen mit jeweils 1 bis 6 Kohlenstoffatomen oder $R^3$ und $R^4$ zusammen eine Alkylengruppe mit 4 oder 5 Kohlenstoffatomen bedeuten, werden tertiär-Butanol und Isopropanol besonders bevorzugt. Als weiteres Beispiel für einen gesättigten sekundären Alkohol sei Cyclohexanol genannt.

Unter den Halogen enthaltenden Metallverbindungen von Elementen der IV. und V. Nebengruppe(n) des Periodensystems werden hier bevorzugt die Verbindungen des Titans, des Zirkons und des Vanadins (Vanadiums) verstanden; von diesen wiederum werden die Titanverbindungen besonders bevorzugt.

Insbesondere haben sich in der Reaktionsstufe A der Katalysatorherstellung die Verbindungen der allgemeinen Formel

$$X_aTi(OR^6)_{4-a}$$

und in der später eingehend beschriebenen Reaktionsstufe B der Katalysatorherstellung die Verbindungen der allgemeinen Formel

$$X'_bTi(OR^7)_{4-b}$$

als geeignet erwiesen. In diesen Formeln bedeuten X und X' unabhängig voneinander jeweils Halogen, besonders bevorzugt jeweils Chlor, $R^6$ und $R^7$ unabhängig voneinander jeweils gleiche oder verschiedene geradkettige oder verzweigte Alkyl- und/oder Arylreste mit 1 bis 8 Kohlenstoffatomen und a und b unabhängig voneinander jeweils 2, 3 oder 4, vorzugsweise 4. Die Verbindungen können jeweils rein oder als Gemische eingesetzt werden. Besonders bevorzugt ist jeweils Titantetrachlorid.

Wird die Reaktionsstufe A als erste Reaktionsstufe bei der Bereitung des Katalysators für das erfindungsgemäße Verfahren durchgeführt, so wird der so modifizierte Feststoff nun vorzugsweise bei 0 bis 100° C, insbesondere 20 bis 100° C, durch wiederholtes Waschen mit Kohlenwasserstoffen, Sedimentieren und Dekantieren weitgehend von löslichen Metall-, insbesondere Titan-, -Verbindungen befreit. Diese Waschvorgänge sind besonders dann bevorzugt, wenn die in der Reaktionsstufe A eingesetzten Alkohole auch primäre Alkohole enthalten haben. Vorzugsweise wird er danach wiederum, wie bereits der Primärfeststoff vor der ersten Reaktionsstufe, in Kohlenwasserstoffen suspendiert. Hierbei gilt für die Konzentration wiederum das bereits dort gesagte. Sinngemäß wird auch verfahren, wenn die im folgenden beschriebene Reaktionsstufe B als erste Reaktionsstufe der Katalysatorbereitung durchgeführt wird.

Der in Reaktionsstufe A modifizierte Feststoff bzw. bei der bevorzugten Arbeitsweise, bei der die Reaktionsstufe A nach Reaktionsstufe B durchgeführt wird, der Primärfeststoff wird in Reaktionsstufe B mit mindestens einer Halogen enthaltenden Verbindung mindestens eines Elementes der IV. und/oder V. Nebengruppe(n) des Periodensystems, wie sie weiter oben bereits definiert worden ist (sind), und mit mindestens einer Metallorganylverbindung der II. und/oder III. Hauptgruppe(n) des Periodensystems umgesetzt.

Die Reaktion wird vorzugsweise bei −40 bis +100° C, insbesondere bei −5 bis +70° C durchgeführt, wobei vorzugsweise je Mol im Feststoff gebundenen Magnesiums 0,01 bis 5, insbesondere 0,1 bis 1

Mol an genannten Metallverbindungen der Nebengruppenelemente, insbesondere Titantetrachlorid, und je Mol besagter Metallverbindung der Nebengruppenelemente, vorzugsweise 0,3 bis 5, insbesondere 0,5 bis 2,5 Mol an genannten Metallorganylverbindungen der Hauptgruppenelemente eingesetzt werden.

Unter einem Mol eines Substanzgemisches wird diejenige Stoffmenge verstanden, die theoretisch (Umsatz = 100% der Theorie) mit der gleichen Menge eines Reaktionspartners reagiert je 1 Mol einer reinen Substanz, die in diesem Substanzgemisch enthalten ist.

Unter den Elementen der II. und III. Hauptgruppen des Periodensystems werden hier insbesondere Beryllium, Magnesium, Bor und Aluminium verstanden, vorzugsweise das Magnesium und besonders vorzugsweise das Aluminium.

Unter den Metallorganylverbindungen dieser Elemente werden solche verstanden, die die Metallatome an Alkyl- und/oder Arylreste mit jeweils 1 bis 20 Kohlenstoffatomen gebunden enthalten. Nicht durch diese genannten Reste gebundenen Valenzen der Metalle können weiterhin mit Wasserstoff und/oder Halogen, vorzugsweise Chlor, ferner auch mit Alkoxy-, Aryloxy- und/oder Siloxyresten mit jeweils 1 bis 20 Kohlenstoffatomen abgesättigt sein. Weiterhin können oligomere Alkylaluminiumverbindungen eingesetzt werden, d. h. solche Verbindungen, die neben den vorstehend genannten Substituenten auch Aluminium-Sauerstoff-Aluminium-Bindungen enthalten. Bevorzugt werden hier Verbindungen der später genauer beschriebenen Formel $AlR_z^8Y_{3-z}$.

Als Beispiele für bevorzugte Verbindungen dieser Art seien genannt:

Aluminiumtriäthyl, Aluminiumtri-n-butyl, Aluminiumtri-isobutyl, Aluminiumtri-n-octyl, Aluminiumisoprenyl, Diäthylaluminiumhydrid, Diisobutylaluminiumhydrid, Äthylaluminiumdichlorid, Diäthylaluminiumchlorid, Äthylaluminiumsesquichlorid, Diäthyläthoxyaluminium, Äthyldimethylsiloxyaluminiumdiäthyl, Bis-(di-isopropylaluminium)oxid und deren Gemische.

In der vorstehend beschriebenen Reaktionsstufe B werden Diäthylaluminiumchlorid, Äthylaluminiumsesquichlorid, Aluminiumisoprenyl, Aluminiumtri-n-octyl oder Gemische dieser Verbindungen besonders bevorzugt.

Die Reaktionszeit der Reaktionsstufe B kann von wenigen Minuten (z. B. 15 Minuten) bis zu mehreren Stunden (z. B. 2 Stunden) betragen, sie ist nicht kritisch.

Die Reaktionsstufe B kann so durchgeführt werden, daß zunächst die vorzugsweise in Kohlenwasserstoff gelösten Hauptgruppenverbindungen, z. B. solche der vorstehend genannten Aluminiumverbindungen, und der vorzugsweise in Kohlenwasserstoffen suspendierte Primärfeststoff bzw. in Stufe A modifizierte Feststoff zusammengegeben und danach die ebenfalls vorzugsweise in Kohlenwasserstoffen gelösten Nebengruppenverbindungen, z. B. das besonders bevorzugte Titantetrachlorid, zudosiert werden. Auch ein gleichzeitiges Zudosieren der Komponenten ist möglich. Vorzugsweise jedoch legt man die Nebengruppenverbindung, z. B. das bevorzugte Titantetrachlorid, und den Feststoff, beide vorzugsweise in Kohlenwasserstoffen gelöst bzw. suspendiert, vor und dosiert die Hauptgruppenverbindungen, vorzugsweise die Aluminiumorganylverbindungen, zu.

Vorzugsweise wird der Katalysatorfeststoff nach der Modifizierung in den beiden Reaktionsstufen A und B bei 0 bis 100°C durch wiederholtes Waschen mit Kohlenwasserstoffen, Sedimentieren und Dekantieren weitgehend von löslichen Verbindungen befreit.

Es kann auch vorteilhaft sein, insbesondere, wenn die Reaktionsstufe B vor der Reaktionsstufe A durchgeführt wird, wie dies besonders bevorzugt ist, den Katalysatorfeststoff nach der 2. Reaktionsstufe einer Nachbehandlung zu unterwerfen.

Diese Nachbehandlung erfolgt durch Umsetzung einer rührfähigen Suspension des Katalysatorfeststoffes in Kohlenwasserstoffen mit einer oder mehreren, vorzugsweise ebenfalls in Kohlenwasserstoffen gelösten Metallorganylverbindung(en) der II. und/oder III. Hauptgruppe(n) des Periodensystems, wie sie bereits vorstehend definiert sind. Von den bevorzugten aluminiumorganischen Verbindungen werden insbesondere Diäthylaluminiumchlorid, Äthylaluminiumsesquichlorid, Aluminiumisoprenyl, Aluminium-tri-n-octyl und deren Gemische bevorzugt.

Diese zusätzliche Nachbehandlung des Katalysatorfeststoffes wird vorzugsweise bei Temperaturen von −40°C bis 150°C, insbesondere von −20°C bis 100°C unter Einsatz von vorzugsweise 0,01 bis 5, insbesondere 0,1 bis 1 Mol der Metallorganylverbindung(en) je Mol im Feststoff gebundenem Magnesiums durchgeführt.

Das eingangs über die Konzentration der Feststoffsuspension gesagte trifft für sämtliche Stufen der Katalysatorbereitung zu. Die Reaktionszeit der Nachbehandlung kann ebenfalls einige Minuten bis mehrere Stunden (z. B. 15 Minuten bis 2 Stunden) betragen.

Eine weitere vorteilhafte Möglichkeit der Nachbehandlung, sei es, daß Reaktionsstufe A vor oder nach Reaktionsstufe B durchgeführt wurde, besteht darin, den Feststoff in Suspension mehrere Stunden (z. B. 2 bis 8 Stunden) bei Temperaturen von 50 bis 100°C zu altern und dann auszuwaschen.

Die Bereitung des Katalysatorfeststoffes und die erfindungsgemäße Durchführung der Polymerisation müssen unter Ausschluß auch geringer Mengen von Sauerstoff und von Wasser oder Wasserdampf durchgeführt werden.

Der in vorstehend beschriebener Weise hergestellte Katalysatorfeststoff, der vorzugsweise durch Waschen bei vorzugsweise 0 bis 100°C mit Kohlenwasserstoffen, Sedimentieren und Dekantieren, insbesondere von löslichen Metallverbindungen, befreit wurde, eignet sich zur Verwendung bei der

erfindungsgemäßen Polymerisation derjenigen alpha-Olefine, die bisher bereits in Gegenwart von Katalysatoren des »Ziegler-Types« bei Drücken von etwa 2 bis 40 bar in der Gasphase oder in Dispersion polymerisiert werden konnten. In einer bevorzugten Ausführungsform des erfindungsgemäßen Verfahrens wird Äthylen im Gemisch mit 0 bis 10 mol-% alpha-Olefinen mit 3 bis 6 Kohlenstoffatomen, z. B. Propen, Buten-1, Isobuten, Penten-1, Hexen-1, eingesetzt und (co)polymerisiert.

Besonders gute Ergebnisse erhält man bereits, wenn man Äthylen homopolymerisiert.

Die erfindungsgemäße, mit vorstehend beschriebenem Katalysatorsystem initiierte Polymerisation kann in der Gasphase oder in Suspension durchgeführt werden. Bei der bevorzugten Polymerisation in Suspension werden die Reaktionsteilnehmer, vorzugsweise in einem Kohlenwasserstoff oder einem Kohlenwasserstoffgemisch dispergiert und bei Drücken von 2 bis 40 bar (absolut), vorzugsweise 2 bis 11 bar und Temperaturen von 60 bis 100° C polymerisiert. Dabei kann gegebenenfalls durch Zusatz von Wasserstoff die Kettenlänge der entstehenden Polymerisate, oder anders ausgedrückt, der Polymerisationsgrad der Produkte geregelt werden.

Unter Kohlenwasserstoffen werden im Rahmen dieser Anmeldung Verbindungen verstanden, die aus den Elementen Kohlenstoff und Wasserstoff zusammengesetzt sind, bevorzugt werden gesättigte Verbindungen wie geradkettige, verzweigte und cyclische Alkane oder Paraffinkohlenwasserstoffe, die bei den angegebenen Temperaturen und Drücken zum überwiegenden Teil flüssig vorliegen, z. B. Alkane mit 3 bis 20 Kohlenstoffatomen. Beispiele sind Propan, die Butane, die Pentane, die Hexane, die Heptane, die Octane, die Nonane, die Decane, Decalin, Cyclohexan und deren Gemische.

Zur Einleitung der Polymerisation wird der Katalysatorfeststoff durch Zugabe von Metallorganylverbindung(en) der II. und/oder III. Hauptgruppe(n) des Periodensystems zum Polymerisationsgemisch aktiviert.

Von den vorstehend bereits definierten Verbindungen dieser Art werden aluminiumorganische Verbindungen der allgemeinen Formel $AlR_z^8Y_{3-z}$ oder Gemische davon bevorzugt, worin $R^8$ gleiche oder verschiedene geradkettige oder verzweigte Alkyl- und/oder Arylreste mit 1 bis 20 Kohlenstoffatomen, Y Wasserstoff und/oder gleiche oder verschiedene Halogenatome, Alkoxy-, Aryloxy- und/oder Siloxyreste mit jeweils 1 bis 20 Kohlenstoffatomen und z 2 oder 3 bedeuten. Besonders bevorzugt sind Aluminiumtriisobutyl, Aluminiumtri-n-octyl und Aluminiumisoprenyl sowie deren Gemische.

Auch die bereits in der Beschreibung von Reaktionsstufe B beschriebenen oligomeren Aluminiumorganylverbindungen können hier eingesetzt werden.

Die Metallorganylverbindungen der II. und III. Hauptgruppen des Periodensystems werden vorzugsweise gegenüber den im Katalysatorfeststoff gebundenen Nebengruppenelementen der IV. und V. Hauptgruppen im Überschuß verwendet. Es ist natürlich auch möglich, einen Unterschuß oder stöchiometrische Mengen einzusetzen. In einer bevorzugten Ausführungsform werden z. B. 2 bis 100, insbesondere 5 bis 50 mol Aluminiumverbindung(en) je Mol im Katalysatorfeststoff enthaltenen, dort chemisch gebundenen Titans verwendet.

Das erfindungsgemäße Polymerisationsverfahren kann kontinuierlich oder diskontinuierlich durchgeführt werden. Bei der diskontinuierlichen Verfahrensweise werden in der vorstehend beschriebenen Weise hergestellter Katalysatorfeststoff, Aktivator, alpha-Olefin, gegebenenfalls Kohlenwasserstoff und gegebenenfalls Wasserstoff in den Reaktor, vorzugsweise einen Autoklaven, vorgelegt und anschließend die Polymerisation durchgeführt. Es können natürlich einzelne oder alle Komponenten ganz oder teilweise nachträglich zudosiert werden.

Bei der kontinuierlichen Verfahrensweise werden die genannten Reaktionskomponenten getrennt oder als Gemisch in der gewünschten Zusammensetzung in den Reaktor kontinuierlich eingespeist. Auch hier ist eine nachträgliche Dosierung von Teilmengen einzelner oder aller Komponenten möglich, bei Verwendung z. B. von Rohrreaktoren auch an verschiedenen Stellen des Reaktors.

Durch das erfindungsgemäße Verfahren können Polymerisate hergestellt werden, die keiner weiteren Nachbehandlung unterzogen werden müssen. Dies wird erreicht durch die wegen seiner überraschend hohen Aktivität benötigte geringe Menge des Katalysatorsystems, die keine merkliche Beeinträchtigung des Produktes bewirken kann. Ein weiterer Vorteil des Katalysatorsystems ist die Herstellung von Polymerisaten mit hervorragenden Pulvereigenschaften, breiter Molekulargewichtsverteilung, sehr guten physikalischen Eigenschaften und guter Verarbeitbarkeit. Zum Beispiel können die erfindungsgemäß hergestellten Polymerisate durch Blasextrusion »schmelzbruchfrei«, z. B. zu Hohlkörpern oder Folien, verformt werden. Von den sehr guten physikalischen Eigenschaften seien hier nur die hohe Steifigkeit, die hohe Schlagzähigkeit und die gute Spannungsrißbeständigkeit genannt.

Die Erfindung wird im folgenden durch Beispiele und Vergleichsbeispiele weiter erläutert.

Der in den Beispielen genannte Schmelzindex $MFI_5$ wird nach DIN (Deutsche Industrie Norm) 53 735 bei 190° C und 49,03 N (5 kp) Belastung bestimmt.

Der Fließfaktor $F_{21,6}$ ist der Quotient der Schmelzindizes bei 211,82 N (21,6 kp) und 49,03 N (5 kp) Belastung und kann als Maß für die Molekulargewichtsverteilung gelten.

Der in der erfindungsgemäßen Poylmerisation verwendbare Katalysator kann z. B. in folgender Weise hergestellt werden:

a) Herstellung des Primärfeststoffes

900 ml einer Hexan-Heptan-Lösung, die 0,5 mol n-Butyl-sec-Butylmagnesium enthielten, wurden innerhalb von 2 Stunden bei 60° C zu 1 mol Chloroform in 420 ml Isooctan dosiert. Es bildete sich ein brauner Feststoff. Man rührte noch ca. eine halbe Stunde bei 60° C und wusch anschließend den Feststoff bei 50 bis 60° C 3mal mit jeweils 3 Liter Isooctan durch wiederholtes Sedimentieren und Dekantieren. Anschließend wurde auf 1 Liter aufgefüllt.

b) Herstellung des Katalysatorfeststoffes

b1) 100 ml der nach a) hergestellten Primärfeststoffsuspension, die 50 mmol Magnesium enthielten, wurden vorgelegt und bei Raumtemperatur unter Rühren mit 20 mmol Isopropanol versetzt. Nach einstündigem Rühren bei 50° C wurde die Suspension mit 100 mmol $TiCl_4$ versetzt, auf 90° C erwärmt und weitere 2 Stunden bei 90° C gerührt. Anschließend wurde auf 50° C gekühlt und der Feststoff durch wiederholtes Sedimentieren und Dekantieren so lange mit Isooctan gewaschen, bis im Dispergiermittel praktisch kein gelöstes Titan mehr nachweisbar war.

Auf dem Feststoff waren 18,8 mmol Titan fixiert.

Der Feststoff wurde in 70 ml Isooctan suspendiert und bei Raumtemperatur mit 15 mmol $TiCl_4$ versetzt. Anschließend erfolgte unter Rühren die Zugabe von 30 mmol Äthylaluminiumsesquichlorid, gelöst in 15 ml Isooctan, innerhalb weniger Minuten. Nach dem Aufheizen auf 50° C wurde 1 Stunde bei 50° C gerührt und anschließend unter wiederholtem Sedimentieren und Dekantieren bei 50° C mit Isooctan gewaschen, bis im Dispergiermittel praktisch kein lösliches Chlorid bzw. Aluminium mehr nachweisbar waren.

Auf dem Katalysatorfeststoff waren insgesamt 33,2 mmol Titan fixiert.

b2) 100 ml der nach a) hergestellten Primärfeststoffsuspension, die 50 mmol Magnesium enthielten, wurden vorgelegt und bei Raumtemperatur unter Rühren mit 15 mmol Titantetrachlorid versetzt. Dann wurden 30 mmol Äthylaluminiumsesquichlorid, gelöst in 15 ml Isooctan, innerhalb 1/4 Stunde zu der Suspension dosiert. Nach dem Erwärmen auf 50° C wurde noch 1 1/2 Stunden gerührt und bei dieser Temperatur so lange mit Isooctan gewaschen, bis in der dekantierten Flüssigkeit praktisch kein Aluminium und kein Chlorid mehr nachweisbar waren.

Der Feststoff enthielt 14,5 mmol gebundenes Titan.

Nach Aufnehmen in 100 ml Isooctan wurden bei Raumtemperatur unter Rühren 15 mmol Isopropanol, gelöst in 10 ml Isooctan, zudosiert. Die Suspension wurde dann 1 Stunde bei 50° C gerührt. Nach Zugabe von 100 mmol Titantetrachlorid wurde auf 90° C erwärmt und noch 1/2 Stunde gerührt. Nach Abkühlen auf 50° C erfolgte ein erneuter Waschvorgang, bis im dekantierten Isooctan praktisch kein gelöstes Titan mehr nachweisbar war.

Es erwies sich als zweckmäßig den Feststoff erneut in 300 ml Isooctan aufzunehmen und 3 Stunden bei 90° C zu altern. Nach wiederholtem Auswaschen bei 50° C mit Isooctan enthielt der Katalysatorfeststoff insgesamt 21 mmol gebundenes Titan.

b3) 100 ml der nach a) hergestellten Primärfeststoffsuspension, die 50 mmol Magnesium enthielten, wurden vorgelegt und bei Raumtemperatur unter Rühren mit 20 mmol Titantetrachlorid versetzt. Dann wurden 30 mmol Äthylaluminiumsesquichlorid, gelöst in 15 ml Isooctan, innerhalb 1/4 Stunde zu der Suspension dosiert. Nach dem Erwärmen auf 50° C wurde noch 1 1/2 Stunden gerührt und bei dieser Temperatur so lange mit Isooctan gewaschen, bis in der dekantierten Flüssigkeit praktisch kein Aluminium und kein Chlorid mehr nachweisbar waren.

Der Feststoff enthielt 18,3 mmol gebundenes Titan.

Nach Aufnehmen in 100 ml Isooctan wurden bei Raumtemperatur unter Rühren 15 mmol Isopropanol, gelöst in 10 ml Isooctan, zudosiert. Die Suspension wurde dann 1 Stunde bei 50° C gerührt. Nach Zugabe von 100 mmol Titantetrachlorid wurde auf 90° C erwärmt und noch 1 Stunde gerührt. Nach Abkühlen auf 50° C erfolgte ein erneuter Waschvorgang, bis im dekantierten Isooctan praktisch kein gelöstes Titan mehr nachweisbar war.

Die Weiterbehandlung erfolgte wie in Beispiel 2). Der Katalysatorfeststoff enthielt insgesamt 25,5 mmol gebundenes Titan.

b) 4. 100 ml der nach a) hergestellten Primärfeststoffsuspension, die 50 mmol Magnesium enthielten, wurden vorgelegt und bei Raumtemperatur unter Rühren mit 15 mmol tert. Butanol versetzt. Nach 10 Minuten Rühren wurde die Suspension innerhalb von 20 Minuten auf 90° C aufgeheizt. Dann wurden 150 mmol $TiCl_4$, gelöst in 20 ml Isooctan, in 5 Minuten unter Rühren in die Suspension eingetropft. Nach einstündigem Rühren bei 90° C wurde auf 50° C abgekühlt und der Feststoff durch wiederholtes Sedimentieren und Dekantieren so lange mit Isooctan gewaschen, bis in dem Dispergiermittel praktisch kein gelöstes Titan mehr nachweisbar war. Auf dem Feststoff waren 11,2 mmol Titan fixiert.

Der Feststoff wurde nun in 60 ml Isooctan suspendiert und mit 11 mmol $TiCl_4$ versetzt, auf 30° C erwärmt, und es wurden unter Rühren in einer halben Stunde 11 mmol Äthylaluminiumsesquichlorid, gelöst in 7,5 ml Isooctan, in die Feststoffsuspension unter Rühren eingetropft. Anschließend wurde

weitere 4 Stunden bei 30° C gerührt. Nach Aufheizen auf 50° C wurde der Feststoff unter wiederholtem Sedimentieren und Dekantieren mit Isooctan gewaschen, bis im Dispergiermittel praktisch kein lösliches Chlorid mehr nachweisbar war. Auf dem Katalysatorfeststoff waren nun insgesamt 21,4 mmol Titan gebunden.

b) 5. 100 ml der Primärfeststoffsuspension von a) (entsprechend 50 mmol gebundenes Mg) wurden in der ersten Reaktionsstufe wie in b) 4. behandelt. Auf dem Feststoff waren danach insgesamt 11 mmol Titan fixiert.

Der gereinigte Feststoff der ersten Reaktionsstufe wurde nun in 60 ml Isooctan suspendiert, mit 12,5 mmol $TiCl_4$ versetzt und auf 0° C gekühlt. Dann wurden unter Rühren in einer halben Stunde 11 mmol Äthylaluminiumsesquichlorid, gelöst in 7,5 ml Isooctan, in die Feststoffsuspension eingetropft.

Zur Nachreaktion wurde noch weitere 4 Stunden bei 0° C und anschließend eine Stunde bei Raumtemperatur gerührt. Der Feststoff wurde zunächst mehrmals bei Raumtemperatur und anschließend bei 50° C mehrmals mit Isooctan gewaschen, sedimentiert und dekantiert, bis in der Waschlösung praktisch kein Chlorid mehr nachzuweisen war. Der Katalysatorfeststoff enthielt insgesamt 16,5 mMol gebundenes Titan.

b) 6. 100 ml der Primärfeststoffsuspension von a), die 50 mmol Magnesium enthielten, wurden vorgelegt und auf 50° C erwärmt.

Dann wurden unter Rühren 7,5 mmol tert. Butanol, gelöst in 20 ml Isooctan, innerhalb von 10 Minuten in die Suspension eingetropft. Nachdem weitere 15 Minuten gerührt worden war, wurden 75 mmol $TiCl_4$, gelöst in 20 ml Isooctan, in 10 Minuten zudosiert. Anschließend wurde auf 90° C erwärmt und eine halbe Stunde gerührt. Nach der Reinigung analog b) 4. waren auf dem Feststoff 6 mmol gebundenes Titan niedergeschlagen.

Nach Suspendieren des Feststoffes in 80 ml Isooctan wurden 11 mmol $TiCl_4$ bei Raumtemperatur zugesetzt, auf 30° C erwärmt und unter Rühren in einer halben Stunde 11 mmol Äthylaluminiumsesquichlorid, gelöst in 7,5 ml Isooctan, zugetropft. Anschließend wurde weitere 4 Stunden bei 30° C gerührt und analog der Verfahrensweise in b) 4. gereinigt. Auf dem Primärfeststoff waren 16,8 mmol gebundenes Titan fixiert.

b) 7. 100 ml der Primärfeststoffsuspension von a), die 50 mmol Magnesium enthielten, wurden bei 50° C vorgelegt, mit 10 mMol tert. Butanol versetzt und weitere 15 Minuten gerührt.

Nach dem Zusatz von 100 mmol $TiCl_4$, gelöst in 20 ml Isooctan, innerhalb von 20 Minuten bei 50° C, wurde die Suspension auf 90° C aufgeheizt und eine weitere halbe Stunde gerührt. Die Reinigung des in der ersten Stufe behandelten Feststoffes erfolgte wie unter b) 4. beschrieben. Danach waren auf dem Feststoff 8,8 mmol gebundenes Titan fixiert.

Nach Suspendieren des Feststoffes in 70 ml Isooctan und dem Zusatz von 25 mmol $TiCl_4$ wurde auf 0° C gekühlt, und es wurden unter Rühren in einer halben Stunde 25 mmol Äthylaluminiumsesquichlorid, gelöst in 14 ml Isooctan, in die Suspension eingetropft. Zur Nachreaktion wurde noch weitere 4 Stunden bei 0° C und eine Stunde bei Raumtemperatur gerührt. Nach der Reinigung analog b) 5. waren auf dem Katalysatorfeststoff insgesamt 26,5 mmol gebundenes Titan fixiert.

b) 8. 100 ml der Primärfeststoffsuspension von a), die 50 mmol Magnesium enthielten, wurden vorgelegt und auf 50° C erwärmt. Nach Versetzen der Suspension mit 15 mmol tert. Butanol wurden nach weiterem 15minütigem Rühren 37,5 mmol Titantetra-n-propylat sowie 112,5 mmol $TiCl_4$, gelöst in 20 ml Isooctan, unter Rühren bei 50° C zugesetzt. Nach Aufheizen auf 90° C wurde die Suspension eine weitere halbe Stunde gerührt. Nach der Reinigung analog b) 4. enthielt der Feststoff 18,7 mmol gebundenes Titan.

Nach Suspendieren des Feststoffes in 70 ml Isooctan und 11 mmol $TiCl_4$ und Erwärmen auf 30° C wurden in einer halben Stunde unter Rühren 11 mmol Äthylaluminiumsesquichlorid, gelöst in 7,5 ml Isooctan, in die Suspension eingetropft.

Nach einer weiteren Behandlung analog b) 4. waren auf dem Feststoff 28,2 mmol Titan fixiert.

b) 9. 100 ml der nach a) hergestellten Primärfeststoffsuspension, die 50 mmol Magnesium enthielten, wurden vorgelegt und bei 30° C unter Rühren mit 11 mmol Titantetrachlorid versetzt. Dann wurden 11 mmol Äthylaluminiumsesquichlorid, gelöst in 7,5 ml Isooctan, in einer halben Stunde zu der Suspension dosiert. Nach 4stündigem Rühren bei 30° C wurde der Feststoff auf 50° C erwärmt und bei dieser Temperatur so lange mit Isooctan gewaschen, bis in der dekantierten Flüssigkeit praktisch kein Aluminium und kein Chlorid mehr nachweisbar waren.

Der Feststoff enthielt 10,5 mmol gebundenes Titan.

Nach Aufnehmen in 100 ml Isooctan wurden bei Raumtemperatur unter Rühren 15 mmol tert.-Butanol, gelöst in 8,5 ml Isooctan, zudosiert. Anschließend wurden 150 mmol Titantetrachlorid zugegeben. Nach Erwärmen auf 50° C wurde noch 1 Stunde gerührt und der Feststoff unter wiederholtem Sedimentieren und Dekantieren mit Isooctan gewaschen, bis im Lösungsmittel praktisch kein Titan mehr nachweisbar war.

Der Feststoff wurde erneut in 100 ml Isooctan suspendiert, mit 12 mmol Äthylaluminiumsesquichlorid versetzt und 1 Stunde bei 50° C gerührt. Nach wiederholtem Auswaschen bei 50° C mit Isooctan enthielt der Katalysatorfeststoff insgesamt 17 mmol gebundenes Titan.

b) 10. 100 ml der Primärfeststoffsuspension nach a) mit 50 mmol gebundenem Magnesium werden in

der ersten Reaktionsstufe wie unter b) 9. behandelt. Nach dem Auswaschen enthielt der Feststoff 10,1 mmol gebundenes Titan.

Zu einer Suspension des in der ersten Reaktionsstufe modifizierten Feststoffes in 100 ml Isooctan wurden anschließend unter Rühren bei Raumtemperatur in 5 bis 10 Minuten 25 mmol tert.-Butanol, gelöst in 7,5 ml Isooctan, dosiert. Nach Zugabe von 150 mmol Titantetrachlorid wurde auf 50° C erwärmt und eine Stunde gerührt. Nach dem Auswaschen, wie unter b) 9. beschrieben, wurde der Feststoff wiederum in 100 ml Isooctan suspendiert.

aa) 50 ml dieser Katalysatorfeststoffsuspension wurden mit 6 mmol Äthylaluminiumsesquichlorid versetzt und eine Stunde bei 50° C gerührt. Nach dem Auswaschen analog b) 9. enthielt der Feststoff (25 mmol gebundenes Magnesium) insgesamt 12 mmol gebundenes Titan.

ab) 50 ml der beschriebenen Katalysatorfeststoffsuspension wurden mit 4,5 mmol Aluminiumisoprenyl versetzt und eine Stunde bei 50° C gerührt. Nach dem Auswaschen analog b) 9. enthielt der Katalysatorfeststoff (25 mmol gebundenes Magnesium) insgesamt 8,5 mmol gebundenes Titan.

b) 11. 200 ml einer nach a) hergestellten Primärfeststoffsuspension, die 100 mmol gebundenes Magnesium enthielten, wurden vorgelegt und bei 30° C unter Rühren mit 20 mmol Titantetrachlorid versetzt. Nach Zudosierung von 25 mmol Äthylaluminiumsesquichlorid, gelöst in 14 ml Isooctan, innerhalb einer halben Stunde wurde die Suspension weitere 4 Stunden bei 30° C gerührt. Nach mehrmaligem Waschen mit Isooctan bei Raumtemperatur und schließlich bei 50° C, bis kein Aluminium bzw. kein Chlorid im dekantierten Lösungsmittel mehr nachweisbar waren, wurde der Feststoff, der 17 mmol gebundenes Titan enthielt, in 250 ml Isooctan suspendiert.

ba) 50 ml dieser Feststoffsuspension, die 20 mmol gebundenes Magnesium und 3,4 mmol gebundenes Titan enthielten, wurden mit 8 mmol tert.-Butanol versetzt und auf 50° C erwärmt. Nach einstündigem Rühren bei 50° C wurden 50 mmol Titantetrachlorid zugesetzt, auf 80° C erwärmt und eine weitere halbe Stunde bei dieser Temperatur gerührt. Nach mehrmaligem Waschen mit Isooctan bei 80° C, bis im Lösungsmittel praktisch kein gelöstes Titan mehr nachweisbar war, waren auf dem Feststoff insgesamt 4,1 mmol Titan fixiert.

bb) Weitere 50 ml der Feststoffsuspension wurden wie unter a) beschrieben, mit 8 mmol tert.-Butanol und 50 mmol Titantetrachlorid behandelt, mit der Abänderung, daß nach Alkoholzusatz 1 Stunde bei Raumtemperatur gerührt wurde. Nach dem Waschen enthielt der Feststoff insgesamt 4,6 mmol Titan fixiert.

bc) Weitere 50 ml der Feststoffsuspension wurden bei Raumtemperatur mit 50 mmol Titantetrachlorid und nach 5 Minuten Rühren mit 8 mmol tert.-Butanol versetzt. Die weitere Behandlung erfolgte wie unter ba). Der Feststoff enthielt schließlich insgesamt 4,6 mmol Titan.

b) 12. 200 ml der nach a) hergestellten Primärfeststoffsuspension, die 100 mmol Magnesium enthielten, wurden vorgelegt und bei 30° C unter Rühren mit 40 mmol Titantetrachlorid versetzt. Dann wurden innerhalb einer halben Stunde 50 mmol Äthylaluminiumsesquichlorid, gelöst in 28 ml Isooctan, zur Suspension getropft. Nach 4stündigem Rühren bei 30° C wurde der Feststoff analog b) 11. aufgearbeitet. Er enthielt nach dieser ersten Reaktionsstufe insgesamt 37 mmol gebundenes Titan.

ca) 50 ml Isooctan wurden mit soviel in der ersten Reaktionsstufe modifiziertem Feststoff versetzt, so daß 20 mmol Magnesium und 7,4 mmol Titan in der Suspension enthalten waren. Diese Suspension wurde analog b) 11. ba) mit 8 mmol tert.-Butanol und 50 mmol Titantetrachlorid behandelt. Nach dem Waschen enthielt der Feststoff insgesamt 9,7 mmol Titan.

cb) Eine Feststoffsuspension, die wie die unter b) 12. ca) beschriebene hergestellt wurde, wurde gemäß b) 11. ba) mit 4 mmol statt 8 mmol tert.-Butanol und 25 mmol statt 50 mmol Titantetrachlorid behandelt. Nach der Aufarbeitung enthielt der Feststoff insgesamt 8 mmol gebundenes Titan.

c) Herstellung nicht erfindungsgemäßer Katalysatorfeststoffe

c1) b1) wurde wiederholt, nur wurde anstelle von Isopropanol n-Propanol eingesetzt.
Der Katalysatorfeststoff enthielt insgesamt 15,9 mmol gebundenes Titan.

c2) b3) wurde wiederholt, nur wurde anstelle von Isopropanol n-Propanol eingesetzt.
Der Katalysatorfeststoff enthielt insgesamt 19,6 mmol gebundenes Titan.

c3) 100 ml der Primärfeststoffsuspension aus a) wurden wie unter b) 4. mit 15 mmol tert.-Butanol und 150 mmol $TiCl_4$ behandelt. Auf dem Feststoff waren 11,2 mmol gebundenes Titan fixiert.

c4) 100 ml der Primärfeststoffsuspension aus a) wurden mit 14 mmol $TiCl_4$ versetzt und auf 30° C erwärmt. Anschließend wurde in einer halben Stunde unter Rühren 14 mmol Äthylaluminiumsesquichlorid, gelöst in 10 ml Isooctan, in die Suspension eingetropft und weitere 4 Stunden gerührt. Nach dem Aufheizen auf 50° C wurde der Feststoff entsprechend b) 4. bei 50° C gewaschen. Der Katalysatorfeststoff enthielt 13,8 mMol gebundenes Titan.

c5) 100 ml der Primärfeststoffsuspension, die 50 mmol gebundenes Magnesium enthielten, wurden bei Raumtemperatur unter Rühren mit 15 mmol tert.-Butanol in 8,5 ml Isooctan versetzt und ca. 10 Minuten gerührt. Nach Zusetzen von 150 mmol Titantetrachlorid und Erwärmen auf 50° C wurde eine Stunde gerührt und analog b) 4. aufgearbeitet. Der Feststoff enthielt 11,4 mmol gebundenes Titan.

Beispiele 1 – 45 und Vergleichsversuche A – J

Die Polymerisation wurde in einem 1-Liter- oder 5-Liter-Laborautoklaven in 700 bzw. 3500 ml Isooctan unter Rühren bei 350 bzw. 650 $min^{-1}$, bei 10 bar Gesamtdruck und 85° C durchgeführt.
In den Tabellen 1 – 3 sind die Versuche mit den Polymerisationsergebnissen zusammengefaßt.
Aus der Tabelle geht die Überlegenheit des erfindungsgemäßen Polymerisationsverfahrens hervor.
Während sich die Produkte der Beispiele 1 bis 45 »schmelzbruchfrei« extrudieren ließen, zeigten die Extrudate der Vergleichsversuche A bis J mittleren bis starken Schmelzbruch.

Tabelle 1

| Beispiele und Vergleichsversuche | Katalysator hergestellt nach | mgTi[1]) | 2 ml $AlR_3$ | Vol.-% $H_2$ im Gasraum | °C | Zeit in Std. | gPE[2]) | $MFI_5/F_{21,6}$ (Pulver) | $MFI_5/F_{21,6}$ (Granulat) | Schüttdichte g/l | Feinanteil <100 µm in % |
|---|---|---|---|---|---|---|---|---|---|---|---|
| 1 | b 1) | 16,2 | Al-isoprenyl | 16 | 90 | $1^3/_4$ | 1240 | 0,25/17,2 | 0,19/20,5 | 440 | 0,0 |
| 2 | b 1) | 18,9 | Al-isoprenyl | 25 | 90 | $1^3/_4$ | 1150 | 1,1/17,4 | 1,0/18,9 | 465 | 0,3 |
| 3 | b 2) | 15,3 | Al-isoprenyl | 27 | 90 | $1^1/_2$ | 1240 | 0,59/18 | 0,48/20,8 | 400 | 0,1 |
| 4 | b 2) | 13,6 | Al-isoprenyl | 24 | 90 | $1^1/_2$ | 1265 | 0,41/17,6 | 0,35/20,0 | 400 | 0,1 |
| 5 | b 2) | 10,3 | Al-isoprenyl | 17 | 90 | $1^1/_2$ | 1135 | 0,14/17,9 | 0,10/23,3 | 370 | 0,1 |
| 6 | b 2) | 15,3 | $Al(n-C_8H_{17})_3$ | 32 | 90 | $1^1/_2$ | 1080 | 0,99/16,9 | 0,83/18,7 | 395 | 0,0 |
| 7 | b 3) | 15,6 | Al-isoprenyl | 24 | 90 | $1^1/_2$ | 1140 | 0,22/20,5 | 0,19/21,6 | 410 | 0,3 |
| 8 | b 3) | 15,6 | Al-isoprenyl | 27 | 90 | $1^3/_4$ | 1260 | 0,38/20 | 0,36/21,4 | 425 | 0,1 |
| 9 | b 3) | 17,5 | Al-isoprenyl | 36 | 90 | 2 | 1200 | 1,00/19,6 | 0,93/20,4 | 430 | 0,3 |
| 10 | b 3) | 17,8 | $Al(n-C_8H_{17})_3$ | 31 | 90 | $1^1/_2$ | 1143 | 0,51/20,6 | 0,51/21,8 | 430 | 0,3 |
| A | c 1) | 10,1 | Al-isoprenyl | 21 | 90 | $1^1/_2$ | 1180 | 0,8/14,1 | – | 385 | 0,2 |
| B | c 2) | 15,5 | Al-isoprenyl | 24 | 90 | $1^1/_2$ | 1200 | 0,43/16,4 | 0,36/16,7 | 420 | 0,1 |
| C | c 2) | 18,5 | Al-isoprenyl | 30 | 90 | $1^1/_2$ | 1160 | 1,10/16,7 | 0,93/17,0 | 415 | 0,0 |

[1]) Gebunden auf dem Katalysatorfeststoff.
[2]) Polyäthylen.

Tabelle 2

| Beispiele und Vergleichsversuch | Katalysator hergestellt nach | Autoklav | mg Ti[1]) | ml Al $R_3$ | Vol.-% $H_2$ im Gasraum | °C | Zeit in Std. | gPE[2]) | $MFI_5$ (Pulver) | $F_{21,6}$ | Schüttdichte g/l | Feinanteil <100 µm in Gew.-% |
|---|---|---|---|---|---|---|---|---|---|---|---|---|
| 11 | b4 | 1 l | 3,1 | 0,3 Al $(n-C_8H_{17})_3$ | 27 | 85 | 2 | 220 | 0,38 | 18,7 | 390 | 0,2 |
| 12 | b4 | 1 l | 3,1 | 0,3 Al-isoprenyl | 27 | 85 | 2 | 271 | 1,2 | 18,8 | 408 | 0,3 |
| 13 | b4 | 1 l | 3,1 | 0,3 Al-isoprenyl | 17 | 85 | 2 | 310 | 0,33 | 18,4 | 400 | 0,3 |
| 14 | b4 | 1 l | 3,1 | 0,26 Al $(n-C_8H_{17})_3$<br>0,04 Al $(i-C_4H_9)_3$ | 27 | 85 | 2 | 270 | 0,8 | 19,1 | 390 | 0,4 |
| 15 | b4 | 5 l | 17 | 2 Al-isoprenyl | 33 | 85 | 2 | 1200 | 1,0 | 18,5 | 397 | 0,1 |
| 16 | b4 | 5 l | 17 | 2 Al-isoprenyl | 36 | 85 | 2 | 1190 | 1,3 | 18,4 | 393 | 0,1 |
| 17 | b5 | 1 l | 2,6 | 0,3 Al-isoprenyl | 27 | 85 | 2 | 220 | 0,9 | 17,0 | 375 | 0,3 |
| 18 | b5 | 1 l | 3,6 | 0,3 Al $(n-C_8H_{17})_3$ | 27 | 85 | 2 | 331 | 0,31 | 18,7 | 350 | 0,1 |
| 19 | b5 | 1 l | 3,6 | 0,2 Al $(i-C_4H_9)_3$ | 27 | 85 | 1,5 | 354 | 2,8 | 15,0 | 382 | 0,1 |
| 20 | b6 | 1 l | 3,4 | 0,3 Al $(n-C_8H_{17})_3$ | 27 | 85 | 2 | 285 | 0,69 | 18,8 | 380 | 0,1 |
| 21 | b6 | 1 l | 3,4 | 0,3 Al-isoprenyl | 27 | 85 | 2 | 334 | 1,4 | 17,0 | 419 | 0,3 |
| 22 | b7 | 1 l | 4,2 | 0,3 Al $(n-C_8H_{17})_3$ | 27 | 85 | 2 | 270 | 0,39 | 17,4 | 360 | 0,3 |
| 23 | b7 | 1 l | 4,2 | 0,3 Al-isoprenyl | 27 | 85 | 2 | 317 | 0,94 | 17,0 | 398 | 0,8 |
| 24 | b8 | 1 l | 4,2 | 0,3 Al $(n-C_8H_{17})_3$ | 27 | 85 | 2 | 315 | 1,1 | 17,0 | 360 | 2,0 |
| D | c3 | 5 l | 9 | 2 Al $(n-C_8H_{17})_3$ | 30 | 85 | 1,5 | 1040 | 0,76 | 13,7 | 380 | 0,1 |
| E | c3 | 5 l | 9 | 2 Al-isoprenyl | 30 | 85 | 1,5 | 1080 | 1,4 | 13,2 | 395 | 0,1 |

Fortsetzung

| Beispiele und Vergleichsversuch | Katalysator hergestellt nach | Autoklav | mg Ti[1]) | ml Al $R_3$ | Vol.-% $H_2$ im Gasraum | °C | Zeit in Std. | gPE[2]) | $MFI_5$ (Pulver) | $F_{21,6}$ | Schüttdichte g/l | Feinanteil <100 μm in Gew.-% |
|---|---|---|---|---|---|---|---|---|---|---|---|---|
| F | c4 | 5 l | 9,2 | 2 Al $(n-C_8H_{17})_3$ | 30 | 85 | 1,5 | 1060 | 0,52 | 14,8 | 360 | 0,5 |
| G | c4 | 5 l | 9,2 | 2 Al-isoprenyl | 30 | 85 | 1,5 | 1080 | 1,4 | 14,3 | 370 | 0,6 |

[1]) Gebunden auf dem Katalysatorfeststoff.
[2]) Polyäthylen.

Tabelle 3

| Beispiele und Vergleichsversuch | Katalysator hergestellt nach | Autoklav | mg Ti[1]) | ml Al $R_3$ | Vol.-% $H_2$ im Gasraum | °C | Zeit in Std. | gPE[2]) | $MFI_5$ (Pulver) | $F_{21,6}$ | Schüttdichte g/l | Feinanteil <100 μm in % |
|---|---|---|---|---|---|---|---|---|---|---|---|---|
| 25 | b) 9 | 1 l | 3,5 | 0,3 Al-isoprenyl | 27 | 85 | 2 | 340 | 0,72 | 17,8 | 430 | 0 |
| 26 | b) 9 | 1 l | 3,5 | 0,3 $Al(n-C_8H_{17})_3$ | 27 | 85 | $1^3/_4$ | 295 | 0,69 | 18,6 | 352 | 0,1 |
| 27 | b) 9 | 5 l | 16 | 2 Al-isoprenyl | 24 | 90 | $1^1/_4$ | 1220 | 1,2 | 17,2 | 380 | 0,1 |
| 28 | b) 9 | 5 l | 16 | 2 Al-isoprenyl | 14 | 90 | 1 | 1300 | 0,4 | 17,3 | 385 | 0,2 |
| 29 | b) 9 | 5 l | 16 | 2 $Al(n-C_8H_{17})_3$ | 24 | 90 | $1^1/_4$ | 1075 | 1,2 | 17,3 | 340 | 0,1 |
| 30 | b) 9 | 5 l | 16 | 2 $Al(n-C_8H_{17})_3$ | 17 | 85 | $1^1/_4$ | 1175 | 0,15 | 20,7 | 330 | 0,2 |
| 31 | b) 9 | 5 l | 16 | 2 $Al(n-C_8H_{17})_3$ | 24 | 85 | $1^1/_4$ | 1185 | 0,35 | 18,3 | 330 | 0,3 |
| 32 | b) 10 aa) | 1 l | 3,3 | 0,3 Al-isoprenyl | 27 | 90 | 2 | 295 | 0,82 | 17,7 | 450 | 0,2 |
| 33 | b) 10 aa) | 1 l | 3,3 | 0,1 $Al(n-C_8H_{17})_3$ + 0,3 Al-isoprenyl | 27 | 90 | 2 | 301 | 1,1 | 17,5 | 435 | 0,3 |

Fortsetzung

| Beispiele und Vergleichsversuch | Katalysator hergestellt nach | Autoklav | mg Ti[1]) | ml Al $R_3$ | Vol.-% $H_2$ im Gasraum | °C | Zeit in Std. | gPE[2]) | $MFI_5$ (Pulver) | $F_{21,6}$ | Schüttdichte g/l | Feinanteil <100 µm in % |
|---|---|---|---|---|---|---|---|---|---|---|---|---|
| 34 | b) 10 ab) | 1 l | 3,3 | 0,3 Al-isoprenyl | 27 | 90 | 2 | 270 | 0,62 | 17,1 | 405 | 0,2 |
| 35 | b) 10 ab) | 1 l | 3,3 | 0,3 $Al(n-C_8H_{17})_3$ | 27 | 90 | 2 | 195 | 0,38 | 19,5 | 405 | 0,3 |
| 36 | b) 11 ba) | 1 l | 3,3 | 0,3 Al-isoprenyl | 27 | 90 | $1^3/_4$ | 320 | 1,2 | 18,3 | 359 | 0,2 |
| 37 | b) 11 ba) | 1 l | 3,3 | 0,3 $Al(n-C_8H_{17})_3$ | 27 | 90 | $1^1/_2$ | 295 | 2,6 | 17,1 | 342 | 0,2 |
| 38 | b) 11 ba) | 5 l | 13,2 | 2 Al-isoprenyl | 17 | 90 | 1 | 1210 | 0,31 | 20,0 | 353 | 0 |
| 39 | b) 11 bb) | 1 l | 3,5 | 0,3 Al-isoprenyl | 27 | 90 | $1^3/_4$ | 305 | 2,3 | 18,2 | 350 | 0 |
| 40 | b) 11 bb) | 1 l | 3,5 | 0,3 $Al(n-C_8H_{17})_3$ | 27 | 90 | $1^3/_4$ | 300 | 2,8 | 16,7 | 351 | 0,1 |
| 41 | b) 11 bc) | 1 l | 3,5 | 0,3 Al-isoprenyl | 27 | 90 | 2 | 245 | 0,8 | 17,9 | 352 | 0,1 |
| 42 | b) 12 ca) | 1 l | 3,4 | 0,3 Al-isoprenyl | 27 | 90 | 2 | 254 | 0,53 | 18,1 | 402 | 0,4 |
| 43 | b) 12 ca) | 1 l | 3,4 | 0,3 $Al(n-C_8H_{17})_3$ | 27 | 90 | 2 | 273 | 1,0 | 17,9 | 394 | 0,2 |
| 44 | b) 12 cb) | 1 l | 3,3 | 0,3 Al-isoprenyl | 27 | 90 | 2 | 290 | 1,3 | 17,2 | 416 | 0,2 |
| 45 | b) 12 cb) | 1 l | 3,3 | 0,3 $Al(n-C_8H_{17})_3$ | 27 | 90 | 2 | 308 | 1,0 | 19,1 | 415 | 0,2 |
| H | c) 5 | 1 l | 2,4 | 0,3 Al-isoprenyl | 24 | 85 | 2 | 260 | 0,95 | 12,9 | 390 | 0,1 |
| I | c) 5 | 1 l | 2,4 | 0,3 $Al(n-C_8H_{17})_3$ | 24 | 85 | 2 | 233 | 0,68 | 14,5 | 370 | 0,1 |
| J | c) 5 | 5 l | 9,5 | 2 Al-isoprenyl | 30 | 85 | 1,5 | 1020 | 1,2 | 13,9 | 380 | 0,2 |

[1]) Gebunden auf dem Katalysatorfeststoff.
[2]) Polyäthylen.

**Patentansprüche**

1. Verfahren zur diskontinuierlichen oder kontinuierlichen Polymerisation von $\alpha$-Olefinen in der Gasphase oder in Kohlenwasserstoffen als Dispergiermittel bei Drücken von 2 bis 40 bar und Temperaturen von 60 bis 100°C, gegebenenfalls unter Verwendung von Wasserstoff als Molekulargewichtsregler in Gegenwart eines Feststoffes als Katalysator, der als Komponente I ein Produkt enthält, das sich von Verbindungen von Elementen der IV. und/oder V. Nebengruppe(n) des Periodensystems der Elemente, des Magnesiums, eines Halogens, einem Alkohol und gegebenenfalls einem Element der II. und/oder III. Hauptgruppe(n) des Periodensystems ableitet und als Komponente II Metallorganylverbindung(en) der II. und/oder III. Hauptgruppe(n) des Periodensystems enthält, dadurch gekennzeichnet, daß Komponente I durch Umsetzung eines Primärfeststoffes, der Magnesium und Halogen enthält, in zwei aufeinanderfolgenden Reaktionsstufen A und B, deren Reihenfolge beliebig ist, hergestellt wird, wobei der (Primär)-Feststoff in Reaktionsstufe A mit sekundären oder tertiären Alkoholen bzw. deren Gemischen und Halogen enthaltender(n) Metallverbindung(en) von Elementen der IV. und/oder V. Nebengruppe(n) des Periodensystems behandelt wird und in Reaktionsstufe B mit Halogen enthaltender(n) Metallverbindung(en) von Elementen der IV. und/oder V. Nebengruppe(n) und mindestens einer Metallorganylverbindung der II. und/oder III. Hauptgruppe(n) des Periodensystems umgesetzt wird, woran sich gegebenenfalls eine Nachbehandlung des so erhaltenen Feststoffes anschließt, bei der der suspendierte Feststoff gealtert und/oder mit Metallorganylverbindung(en) der II. und/oder III. Hauptgruppe(n) des Periodensystems umgesetzt wird.

2. Verfahren nach Anspruch 1, dadurch gekennzeichnet, daß der Primärfeststoff aus in Kohlenwasserstoffen löslichen Magnesiumverbindungen und Chlorkohlenwasserstoff- und/oder Chlorkohlenstoffverbindungen mit 1 bis 6 Kohlenstoffatomen, von denen wenigstens eines, mindestens zwei Chloratome direkt gebunden trägt, hergestellt wird.

3. Verfahren nach Anspruch 1 oder 2, dadurch gekennzeichnet, daß der (Primär)-Feststoff in Reaktionsstufe A in Kohlenwasserstoffen suspendiert und mit sekundären und/oder tertiären Alkoholen der allgemeinen Formeln $R^3R^4R^5COH$ bzw. $R^3R^4HCOH$, worin $R^3$, $R^4$ und $R^5$ gleiche oder verschiedene, geradkettige, gesättigte Alkylgruppen mit 1 bis 6 Kohlenstoffatomen oder $R^3$ und $R^4$ eine Alkylengruppe mit 4 oder 5 C-Atomen bedeuten, und mit Halogen enthaltenden Metallverbindungen von Elementen der IV. und/oder V. Nebengruppe(n) des Periodensystems umgesetzt wird.

4. Verfahren nach einem der Ansprüche 1 bis 3, dadurch gekennzeichnet, daß der (Primär)-Feststoff in Reaktionsstufe B in Kohlenwasserstoffen dispergiert und mit Titanverbindungen der allgemeinen Formel $X_b'Ti(OR^7)_{4-b}$ oder Gemischen dieser Titanverbindungen sowie aluminiumorganischen Verbindungen umgesetzt wird, wobei X' gleiche oder verschiedene Halogenatome, $R^7$ gleiche oder verschiedene, geradkettige oder verzweigte Alkyl- und/oder Arylreste mit 1 bis 8 Kohlenstoffatomen und b 2, 3 oder 4 bedeuten.

5. Verfahren nach Anspruch 3, dadurch gekennzeichnet, daß der (Primär)-Feststoff in der Reaktionsstufe A mit tert.-Butanol und/oder Isopropanol und Titanverbindungen der allgemeinen Formel $X_aTi(OR^6)_{4-a}$ oder Gemischen der Titanverbindungen umgesetzt wird, in der X gleiche oder verschiedene Halogenatome, $R^6$ gleiche oder verschiedene, geradkettige oder verzweigte Alkyl- und/oder Arylreste mit 1 bis 8 Kohlenstoffatomen und a 2, 3 oder 4 bedeuten.

6. Verfahren nach einem der Ansprüche 1 bis 5, dadurch gekennzeichnet, daß der in den zwei Reaktionsstufen modifizierte Katalysatorfeststoff mit Kohlenwasserstoffen gewaschen, in Kohlenwasserstoffen dispergiert und mit in Kohlenwasserstoffen gelösten Metallorganylverbindungen der II. und/oder III. Hauptgruppe (n) des Periodensystems umgesetzt wird.

7. Verfahren nach Ansprüchen 1 oder 6, dadurch gekennzeichnet, daß als Metallorganylverbindungen der II. und/oder III. Hauptgruppe(n) des Periodensystems aluminiumorganische Verbindungen eingesetzt werden.

8. Verfahren nach einem der Ansprüche 1 bis 5, dadurch gekennzeichnet, daß der modifizierte Feststoff in Kohlenwasserstoff suspendiert, mehrere Stunden bei 50 bis 100°C gealtert und anschließend ausgewaschen wird.

9. Verfahren nach einem der Ansprüche 1 bis 8, dadurch gekennzeichnet, daß man den in zwei Stufen bereiteten und gegebenenfalls nachbehandelten Katalysatorfeststoff bei der Polymerisation der alpha-Olefine mit aluminiumorganischen Verbindungen der allgemeinen Formel $AlR_z^8Y_{3-z}$, oligomere Aluminiumverbindungen oder Gemischen dieser Verbindungen aktiviert, worin $R^8$ gleiche oder verschiedene, geradkettige oder verzweigte Alkyl- und/oder Arylreste mit 1 bis 20 Kohlenstoffatomen, Y Wasserstoff und/oder gleiche oder verschiedene Halogenatome, Alkoxy-, Aryloxy- und/oder Siloxygruppen mit jeweils 1 bis 20 Kohlenstoffatomen und z 2 oder 3 bedeuten.

**Claims**

1. Process for the discontinuous or continuous polymerization of $\alpha$-olefins in the gas phase or in hydrocarbons as a dispersion medium at pressures of from 2 to 40 bar and temperatures of from 60 to

100° C, optionally in the presence of hydrogen as a molecular weight regulator, and in the presence of a solid polymerization catalyst which, as component I, comprises a product deriving from compounds of elements of the IV and/or V sub-group(s) of the Periodic Table of elements, of magnesium, of a halogen, of an alcohol and, optionally, of an element of the II and/or III main group(s) of the Periodic Table, and which, as component II, comprises organometallic compounds of the II and/or III main group(s) of the Periodic Table, characterized in that compound I is prepared by reacting a primary solid containing magnesium and halogen, in two successive reaction stages A and B, in either order, wherein in reaction stage A the (primary) solid is treated with secondary or tertiary alcohols or mixtures thereof and with halogen-containing metal compounds of elements of the IV and/or V sub-group(s) of the Periodic Table, and wherein in reaction stage B said (primary) solid is reacted with halogen-containing metal compounds of elements of the IV and/or V sub-group(s) of the Periodic Table, and with at least one organometallic compound of the II and/or III main group(s) of the Periodic Table, which reactions may optionally be followed by a post-treatment of the solid thus obtained, in which treatment the suspended solid is aged and/or is reacted with organometallic compounds of the II and/or III main group(s) of the Periodic Table.

2. Process according to claim 1, characterized in that the primary solid is prepared from magnesium compounds soluble in hydrocarbons and chlorohydrocarbon and/or chlorocarbon compounds having from 1 to 6 carbon atoms, at least one of which is directly bonded to at least two chorine atoms.

3. Process according to claim 1 or 2, characterized in that, in reaction stage A, the (primary) solid is suspended in hydrocarbons and is reacted with secondary and/or tertiary alcohols of the general formulas $R^3R^4R^5COH$ and $R^3R^4HCOH$, respectively, wherein $R^3$, $R^4$ and $R^5$ represent identical or different, straight-chain, saturated alkyl groups having from 1 to 6 carbon atoms or wherein $R^3$ and $R^4$ represent an alkylene group having 4 or 5 carbon atoms, and with halogen-containing metal compounds of elements of the IV and/or V sub-group(s) of the Periodic Table.

4. Process according to anyone of claims 1 to 3, characterized in that, in reaction stage B, the (primary) solid is dispersed in hydrocarbons and is reacted with titanium compounds of the general formula $X_b'Ti(OR^7)_{4-b}$ or mixtures of said titanium compounds as well as with organoaluminium compounds, wherein X' represents identical or different halogen atoms, $R^7$ represents identical or different, straight-chain or branched alkyl and/or aryl radicals having from 1 to 8 carbon atoms and b is 2, 3 or 4.

5. Process according to claim 3, characterized in that, in reaction stage A, the (primary) solid is reacted with tert.-butanol and/or isopropanol and with titanium compounds of the general formula $X_aTi(OR^6)_{4-a}$ or mixtures of said titanium compounds, wherein X represents identical or different halogen atoms, $R^6$ represents identical or different, straight-chain or branched alkyl and/or aryl radicals having from 1 to 8 carbon atoms and a is 2, 3 or 4.

6. Process according to anyone of claims 1 to 5, characterized in that the catalyst solid modified in the two reaction stages is washed with hydrocarbons, is dispersed in hydrocarbons and is then reacted with organometallic compounds of the II and/or III main group(s) of the Periodic Table, which compounds are dissolved in hydrocarbons.

7. Process according to claims 1 or 6, characterized in that organoaluminium compounds are used as organometallic compounds of the II and/or III main group(s) of the Periodic Table.

8. Process according to anyone of claims 1 to 5, characterized in that the modified solid is suspended in a hydrocarbon, is aged at 50 to 100° C for several hours and is washed thereafter.

9. Process according to anyone of claims 1 to 8, characterized in that the catalyst solid, prepared in two stages and optionally post-treated, is activated in the polymerization of the alpha-olefins by means of organoaluminium compounds of the general formula $AlR_z^8Y_{3-z}$, oligomeric aluminium compounds or mixtures of said compounds, wherein $R^8$ represents identical or different, straight-chain or branched alkyl and/or aryl radicals having from 1 to 20 carbon atoms, Y represents hydrogen and/or identical or different halogen atoms, alkoxy, aryloxy and/or siloxy groups each having from 1 to 20 carbon atoms, and z is 2 or 3.

**Revendications**

1. Procédé de polymérisation discontinue ou continue d'oléfines $\alpha$ en phase gazeuse ou dans des hydrocarbures comme milieux de dispersion, sous des pressions de 2 à 40 bars et à des températures de 60° à 100°C, avec utilisation éventuelle d'hydrogène comme agent de régulation du poids moléculaire, en présence, comme catalyseur, d'un solide qui contient comme constituant I un produit qui dérive de composés d'éléments du ou des sous-groupes IV et/ou V du tableau périodique des éléments, du magnésium, d'un halogène, d'un alcool et éventuellement d'un élément du ou des groupes principaux II et/ou III du tableau périodique et, comme constituant II, un ou des composés organo-métalliques dérivant d'éléments du ou des groupes principaux II et/ou III du tableau périodique, procédé caractérisé en ce qu'on prépare le constituant I par réaction d'un solide primaire, qui contient du magnésium et de l'halogène, en deux étapes succesives de réaction A et B, dont l'ordre est quelconque, en traitant dans l'étape A le solide (primaire) avec des alcools secondaires ou

tertiaires ou avec leur mélange et avec un ou des composés de métaux, contenant de l'halogène et dérivant de l'élément du ou des sous-groupes IV et/ou V du tableau périodique et en faisant réagir dans l'étape B de réaction avec un ou des composés de métaux, contenant de l'halogène et dérivant d'éléments du ou des sous-groupes IV et/ou V et avec au moins un composé organo-métallique dérivant d'élément du ou des groupes principaux II et/ou III du tableau périodique, le solide ainsi obtenu étant éventuellement soumis ensuite à un traitement complémentaire au cours duquel ce solide, mis en suspension, est soumis à un vieillissement et/ou est mis à réagir avec un ou des composés organo-métalliques dérivant d'éléments du ou des groupes principaux II et/ou III du tableau périodique.

2. Procédé selon la revendication 1, caractérisé en ce que le solide primaire est produit à partir de composés du magnésium, soluble dans les hydrocarbures et à partir d'hydrocarbures chlorés et/ou de composés contenant du chlore et du carbone et comportant 1 à 6 atomes de carbone dont l'un au moins porte au moins 2 atomes de chlore directement fixés.

3. Procédé selon l'une des revendications 1 et 2, caractérisé en ce qu'on met en suspension dans des hydrocarbures le solide (primaire) dans l'étape A de réaction et on le fait réagir avec des alcools secondaires et/ou tertiaires répondant aux formules générales $R^3R^4R^5COH$ ou $R^3R^4HCOH$ (dans lesquelles $R^3$, $R^4$ ou $R^5$ représentent des groupes alkyles linéaires et saturés, identiques ou différents, comportant 1 à 6 atomes de carbone, ou bien $R^3$ et $R^4$ représentent un groupe alkylène comportant 4 ou 5 atomes de carbone) et avec des composés de métaux, contenant de l'halogène et dérivant d'éléments du ou des sous-groupes IV et/ou V du tableau périodique.

4. Procédé selon l'une quelconque des revendications 1 à 3, caractérisé en ce qu'on disperse, dans l'étape B de réaction, le solide (primaire) dans des hydrocarbures et l'on le fait réagir avec des composés de titane répondant à la formule générale:

$$X_b'Ti(OR^7)_{4-b}$$

ou avec des mélanges de ces composés du titane ainsi qu'avec des composés organiques de l'aluminium, X' représentant des atomes d'halogène identiques ou différents; $R^7$ représentant des radicaux alkyles et/ou aryles identiques ou différents, linéaires ou ramifiés comportant 1 à 8 atomes de carbone, et b valant 2, 3 ou 4.

5. Procédé selon la revendication 3, caractérisé en ce qu'on fait réagir dans l'étape A de réaction le solide (primaire) avec du tertio-butanol et/ou de l'isopropanol et des composés du titane, ou des mélanges de composés du titane, de formule générale:

$$X_aTi(OR^6)_{4-a}$$

dans laquelle X représente des atomes d'halogène identiques ou différents; $R^6$ représente des radicaux alkyles et/ou aryles identiques ou différents, linéaires ou ramifiés, comportant 1 à 8 atomes de carbone et a vaut 2, 3 ou 4.

6. Procédé selon l'une quelconque des revendications 1 à 5, caractérisé en ce qu'on lave avec des hydrocarbures le catalyseur solide modifié au cours des deux étapes de réaction, on le disperse dans des hydrocarbures et on le fait réagir avec des composés organo-métalliques, dérivant d'éléments du ou des groupes principaux II et/ou III du tableau périodique, composés qui sont dissout dans des hydrocarbures.

7. Procédé selon l'une des revendications 1 ou 6, caractérisé en ce qu'on utilise, comme composés organo-métalliques dérivant d'éléments du ou des groupes principaux II et/ou III du tableau périodique, des composés organiques de l'aluminium.

8. Procédé selon l'une quelconque des revendications 1 à 5, caractérisé en ce qu'on met le solide modifié en suspension dans un hydrocarbure, on le soumet à plusieurs heures de vieillissement entre 50° et 100° C, puis on le lave à fond.

9. Procédé selon l'une quelconque des revendications 1 à 8, caractérisé en ce qu'on soumet, lors de la polymérisation des oléfines $\alpha$, le solide à rôle de catalyseur, préparé en deux étapes et ayant éventuellement subi un traitement complémentaire, à une activation à l'aide de composés organiques de l'aluminium de formule générale $AlR_x^8Y_{3-z}$, d'oligomères de composés d'aluminium ou de mélanges de tels composés, dans quelle formule $R^8$ représente des radicaux alkyles et/ou aryles identiques ou différents, linéaires ou ramifiés, ayant 1 à 20 atomes de carbone; Y représente un atome d'hydrogène et/ou des atomes d'halogène identiques ou différents, ou des groupes alcoxy, aryloxy et/ou siloxy ayant chacun 1 à 20 atomes de carbone; et z vaut 2 ou 3.